# EUROPEAN PATENT SPECIFICATION

(11) **EP 0 841 552 B1**
(45) Date of publication and mention of the grant of the patent: **07.04.1999**
(21) Application number: 97110474.0
(22) Date of filing: 26.06.1997
(51) Int. Cl.: G01M 11/00, H04B 10/00, G02B 6/00

(54) **Optical time domain reflectometer for measurement in optical networks with currently applied traffic signals**
Optisches Zeitbereichsreflektometer für Messungen in optischen Netzwerken während des Datentransferbetriebs
Reflectomètre optique temporel pour effectuer des mesures dans des réseaux optiques pendant transfert de données

(30) Priority: 16.01.1997 DE 19701256
(43) Date of publication of application: 13.05.1998
(73) Proprietor: Hewlett-Packard Company, Palo Alto, California 94304 (US)
(72) Inventor: Thoma, Peter, 72108 Rottenburg (DE); Hoffmann, Peter, 71032 Böblingen (DE)
(74) Representative: Kurz, Peter

(56) References cited:
- EP-A- 0 530 025
- US-A- 4 591 231
- US-A- 4 737 026
- US-A- 5 453 827
- US-A- 5 589 933

## Description

The invention relates to a measuring instrument according to the preamble of Claim 1.

Optical time domain reflectometers (OTDRs) usually are employed for monitoring and error analysis of optical fibers and networks built therefrom. Typically the communication traffic on the segment to be measured is switched off for the measurement. A permanent or at least periodic monitoring allows for an early intervention if degradation occurs and gives advance warning to the network operator before network failure.

More recent networks, as disclosed in, e.g., US-A-5 453 827, use multiple wavelengths for data transmission. In some cases transmission takes place in both directions of a line alternately. For monitoring and characterization or measurement of such a network a measuring wavelength different from the communication signals (traffic signals) has to be used in order to prevent the measuring signal - i.e. the signal being back-scattered or reflected from the network when the measuring wavelength is applied - being distorted or too strongly attenuated for a meaningful measurement.

An object of the invention is to propose a measuring instrument for the measurement of reflected optical signals to test the operational ability of an optical network in operation.

The object is met by the characteristics stated in Claim 1.

A concept of the invention is to position a switchable filter unit before a detector unit for the measurement of the optical signals being reflected by an optical measurement section, which suppresses or at least strongly attenuates the communication signals with one or more different wavelengths on the measurement section and allows for transmission of the reflected optical measuring signals to the optical detector unit e.g. an avalanche photo diode (APD), of the measuring instrument.

The inventive measuring instrument serves especially for the measurement of reflected signals of an optical measurement section, as e.g. on fiber optical networks, parts or sections of a network or on optical components in such networks. In an OTDR for measurement of reflected optical signals a measuring signal with a measuring wavelength is coupled into the measurement section and the reflected signal to be measured is detected with an optical detector unit and passed to a computer for quantitative analysis and visual representation.

To be able to carry out measurements in a network in operation with communication signals, the invention proposes to generate a signal of a measuring wavelength differing from the communication signals and to couple it into the measurement section. Preferably a measuring signal is coupled in with a wavelength longer than the longest wavelength of the communication signals. To enable correct measurement the invention proposes further to position a switchable filter unit in the optical path between the measurement section and optical measuring unit, which allows for transmission of the signals scattered or reflected optical by the measurement section to be tested to the detector unit and attenuates the communication signals to a sufficient extent, thereby avoiding or at least strongly reducing the effect on the detector unit.

According to an advantageous embodiment of the invention, the inventive filter device is designed to accommodate some or even all optical filters necessary to keep all usually applied communication signals back from the detector unit (APD).

In another advantageous embodiment of the invention successively all filters available in the filter device are put into the optical path between measurement section and detector unit (APD). If the insertion of a filter for a specific wavelength has no influence on the measured signal returned from the detector unit (APD), it indicates the absence of communication signals with the wavelength of the filter on the measurement section. Such a wavelength is suitable for a later measurement of the measurement section. If the insertion of a filter for a specific wavelength has an effect on the measured signal returned from the detector unit (APD), this is, in reverse, a sign for the presence of a communication signal with corresponding wavelength on the measurement section and that such a wavelength should not be used for a measurement of the measurement section with the inventive measuring instrument to keep the influence on the reflected signals of the measurement section small. For practical reasons it is intended that the filters of a wavelength, the insertion of which into the optical path has an influence on the measured signal returned from the detector unit (APD), be left in the optical path for preparing the measurement and to remove filters of a wavelength without influence from the optical path for the preparation of the measurement. If all available filters of the inventive filter device are inserted into the optical path it is established which measuring wavelength of the inventive measuring instrument can be used for the measurement of the measurement section. If this has not been done already in the preparation of the measurement at least the filter of this measuring wavelength is removed from the optical path before the actual measurement on the measurement section with applied communication signals takes place.

It is understood that the detector unit can also be used for the registration of the optical power present on the optical measurement section if no filter is introduced into the optical path of the inventive filter unit.

For practical reasons a control unit for the mechanical movements of the filters into the optical path of the filter device is provided in the inventive measuring instrument, which can be implemented as a hardware solution or as a software solution and , for convenience, carries out or gives rise to the mechanical and electrical settings for the measurement on the measuring instrument and its components. As described before it is established which measuring wavelength for practical considerations should be used for a measurement of the measurement section.

In another advantageous embodiment of the invention, in the inventive measuring instrument one or more signal sources for the generation of the usually employed measuring wavelengths are provided, which can be identical with the usual communication signals.

In another advantageous embodiment of the invention for practical purposes a control (hardware or software solution) is provided in the inventive measuring instrument to control the wavelength of a signal source - as already described - for an emission of a measuring signals into the measurement section and the inventive measuring instrument determines the measurement of the reflected signals via the detector unit (APD) and the computing unit which follows. It can be useful to display the measured data visually or to feed them into a comparator, which e.g. at a given departure causes alert. Hence important optical networks for example can be monitored with respect to their operational ability permanently without human involvement. Furthermore the inventive measuring instrument may comprise minimal equipment with filters in the inventive filter device, which are adapted to the concrete communication signals on the network concerned.

From the description hitherto it is obvious that the invention allows for the realization of a fully automatic measuring instrument for measurements of the operational ability of optical measurement sections with applied communication signals without need for switching off the measurement section to carry out the measurement.

Furthermore, it is advantageous that an inventive measuring device is available for carrying out measurements on optical measurement sections with applied communication signals, which requires only one connection to the measurement section and only one detector unit (APD). With a single component a flexible and cost saving adaptation of the measuring wavelength for the communication wavelengths present on the measurement section is possible. Depending on the wavelength of the communication signals present on the measurement section different filter arrangements such as high-pass, low-pass, or band-pass can be inserted into the inventive filter device.

This also allows the use of the inventive measuring instrument in so-called WDM systems (wavelength division multiplexing), in which a multitude of communication signals of different wavelength (communication channels) with small differences (typically 2 nm) are present and the measuring wavelength in the inventive measuring system can be chosen such that the measuring wavelength fits to a free channel.

In addition the inventive switchable filter device can be fitted into existing optical time domain reflectometers (OTDRs) by placing it between the output of an existing measuring instrument and the measurement section to be tested.

In one implementation of the invention the inventive measuring instrument has one or more signal sources for the generation of measuring wavelengths, which are longer than the wavelength of the communication signals on the measurement section. Preferably in the inventive measuring instrument optical signal sources are intended, which generate a measuring wavelength of 1.65 µm, 1.55 µm, and/or 1.31 µm (wavelengths of customary communication signals) for the measurement of the measurement section. As described to prevent disturbance of the measurement by communication signals of equal wavelength, a signal, preferably from the set of measuring wavelengths available in the inventive measuring instrument, of such a measuring wavelength is coupled into the measurement section, which differs from the wavelengths of the communication signals present on the measurement section. In case the wavelength of one on the customary or possible communication signals for the measurement section is not used on it, the measuring wavelength can also be the wavelength of a communication signal.

For the generation of signals with measuring wavelengths in the inventive measuring instrument an OTDR module is provided with a first laser source, a second laser source and a third laser source for the generation of the measuring wavelengths mentioned before. It is understood, that more or fewer sources for the generation of a signal having a suitable measuring wavelength can be provided. Equally, the optical sources can be designed in a way as to generate measuring wavelengths different from the aforementioned measuring wavelengths, provided they are suited for a measurement of the optical measurement section. The choice of the intended measuring wavelength will be orientated especially on the communication networks the inventive measure instrument is designed for and the communication wavelengths usually present on the communication network.

In a possible embodiment of the invention it is intended to connect at least one wavelength-dependent coupler each between the output of the inventive measuring instrument and a signal source for the generation of a measuring wavelength. Equally, between any two signal sources a wavelength-dependent coupler is intended. The measuring wavelength emerging from the last wavelength-dependent coupler in direction of the output of the measuring instrument is connected via an optical fiber to the input of a wavelength-independent coupler. The input of the wavelength-independent coupler is also connected to a detector unit (APD) via the inventive switchable filter device with one or more optical fibers in between them. The output of the wavelength-dependent coupler is connected to the output for connection to the measurement section of the inventive measuring instrument via an optical fiber. The output of the wavelength-independent coupler is connected to a monitor photo diode, also via an optical fiber. The monitor photo diode detects the signal fed into the measurement section and allows for the construction of a control circuit, which compares the wavelength and/or the signal height of the measuring wavelength fed into the measurement section with a reference value and, if necessary, adjusts it by influencing the signal sources. To feed only one measuring wavelength into the measurement section, it can be intended, that the control unit of the measuring instrument controls only one single suitable signal source. It can also be intended, that all signal sources are employed for the generation of the available measuring wavelengths and an electrically actuated blocking device is assigned to each signal source, which are altogether wired in a way that only the selected suitable measuring wavelength is passed through to the output of the measuring instrument.

In a preferred embodiment of the invention one or all signal sources for the generation of a measuring wavelength are built from laser diodes which, for example, emit a wavelength of 1.31 µm, 1.55 µm, or 1.65 µm. The detector unit, e.g., can be built with an avalanche photo diode (APD).

Preferably, the switchable filter device (SWF) is arranged in the optical path between the detector unit (APD) and the input of the wavelength-independent coupler (WIC). The switchable filter device (SWF) can be also arranged in the optical path between the output of the wavelength-independent coupler (WIC) and the port of the measuring instrument (OTDR port) for connecting the measuring instrument with the measuring section. Equally the switchable filter device (SWF) can be positioned between the output of the inventive or an existing measuring instrument, e.g. for fitting an existing measuring instrument and the measurement section to be tested.

In an embodiment of the invention the switchable filter device (SWF) has a first optical lens at its input and a second optical lens at its output. In the optical path between the first and second lens one or more optical filters are provided for the attenuation of the communication signals present on the optical measurement section. For example, the optical filters can be moved with manually or electrically operated actuators, e.g. by the operator or preferably via a control provided with the inventive control, as described.

The switchable filter device (SWF) can consist of a multitude of optical filters for different wavelengths, especially for 1.31 µm, 1.55 µm and/or 1.65 µm which are connected in series and can be moved into the optical path. On the axis of an actuator one or more filters can also be built in, which can be moved into the optical path of the switchable filter device (SWF) one after another and/or stacked e.g. in the form of a slider or a filter wheel with several filters rotating through the optical path.

In another embodiment of the invention on the actuator axis one or more optical filters are placed which can be tilted by the actuator in the optical path of the switchable filter device (SWF). Especially in the case of wavelengths of communication signals lying close to each other, such a solution enables the switchable filter device (SWF) to manage with a small number of optical filters, because the wavelength influenced by a filter and the filter characteristics depends on the angle under which the filter is positioned in the optical path.

One or more of the actuators influencing the switchable filter device (SWF) can be designed in a way that one or more optical filters of the switchable filter device (SWF) can be moved into the optical path by rotation, tilting or wobbling. The actuator can be driven e.g. electrically by a rotating magnet, a stepping motor or a linear drive and/or a wobble plate can be used. When using a wobble plate it is advantageous that a small change in the tilt angle of the filters brought into the optical path of the switchable filter device (SWF) is made possible at a large angle of rotation.

In another embodiment of the invention one or more of the filters of the switchable filter device (SWF) are built from an electrically controllable acousto-optical filter.

In a further embodiment of the invention the detector unit (APD) is connected directly and not via an optical fiber to the lens of the output of the switchable filter device (SWF). If the detector unit (APD) is connected to the lens of the output of the switchable filter device (SWF) via an optical fiber, this is preferably done not via a thin, so-called single-mode fiber, which usually has a thickness of 9 µm, but instead via a thick optical fiber with a thickness of, for example, 50µm. If a customary 9 µm thick fiber is located preferably at the input of the switchable filter device (SWF), there is a mapping from the small to the large fiber. This leads to a high thermal stability of the inventive arrangement and additionally allows for an easier adjustment.

In an embodiment of the invention collimating, gradient, spherical and/or dichroic lenses are provided at the input or output of the inventive switchable filter device (SWF) before and behind the optical path.

The housing of the switchable filter device (SWF) can be made of metal, for example, in which a bore for the optical path is provided. In addition, a conical bore can be located to the left and/or to the right of the bore at the input and/or the output of the switchable filter device (SWF) each to accommodate an optical fiber.

For a mobile arrangement of the filters of the switchable filter device (SWF) in the optical path one or more forks for mounting the filters in the fashion of a throttle valve in a carburetor can be provided, which are, for example, arranged in series in the optical path of the switchable filter device.

Equally, one or more filters of the switchable filter device (SWF) can be moved manually or electrically, into the optical path of the switchable filter device (SWF) in the fashion of a sealing cap actuated at its border at the housing of the switchable filter device.

It is understood, and moreover emphasized explicitly, that the available invention refers to all useful and new combinations of the aforementioned features standing alone as well as in any combination. Furthermore, all advantages stated may be regarded at as solutions of the tasks and problems given with the invention.

Subsequently the invention is explained in more detail with a simple sample embodiment.
The figures supplied depict:
- Figure 1: A module of the inventive measuring instrument with a switchable filter device, three signal sources and a detector unit for the measurement of the signals reflected from the measurement section;
- Figure 2: a detailed representation of the inventive switchable filter device;
- Figure 3: a representation of the transmission T of the optical path of the switchable filter device as a function of the wavelength A with and without communication signals on the optical measurement section to be measured.

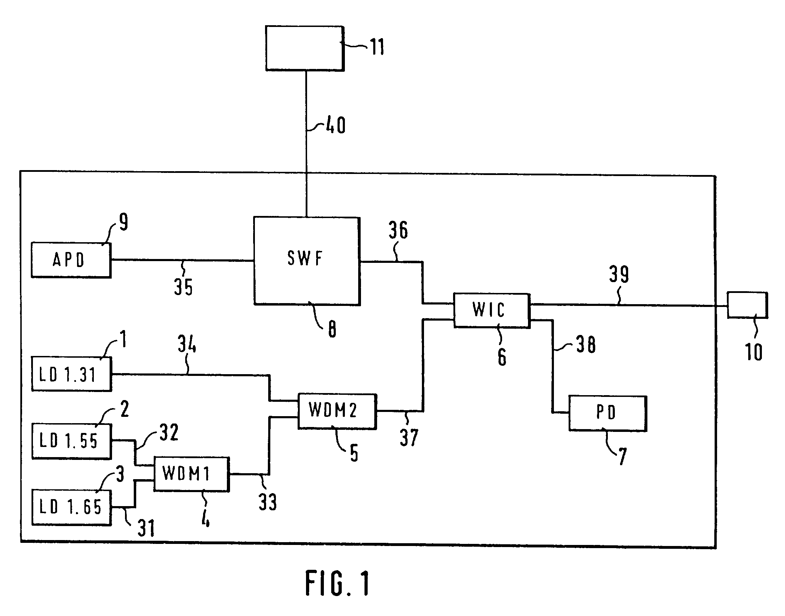

A module of the inventive measuring instrument according to Figure 1 contains a first laser source 1 (LD 1.31), a second laser source 2 (LD 1.55) and a third laser source 3 (LD 1.65). The second and the third laser source 2 and 3 are connected to the input of a wavelength-dependent coupler 4 (WDM 1) via optical fibers 31 and 32. A second wavelength dependent coupler 5 (WDM 2) is connected at its input with the first laser source 1 via an optical fiber 34 and also at its input with the output of the first wavelength-dependent coupler 4. The output of the second wavelength-dependent coupler 5 is in connected to the input of a wavelength-independent coupler 6 (WIC 6) via an optical fiber 37. Furthermore the input of the coupler 6 is connected with the input of the inventive switchable filter device 8 (SWF) via an optical fiber 36. The output of the switchable filter unit 8 (SWF) is connected to the optical detector unit 9 , for example an avalanche photo diode (APD) via an optical fiber 35. Via an electric wire 40 the switchable filter device 8 (SWF) is connected to a final control element 11. The output of the wavelength-independent coupler 6 (WIC) is connected with an monitor photo diode 7 (PD) via an optical fiber 38 and with the output 10 of the inventive measuring instrument via an optical fiber 39.

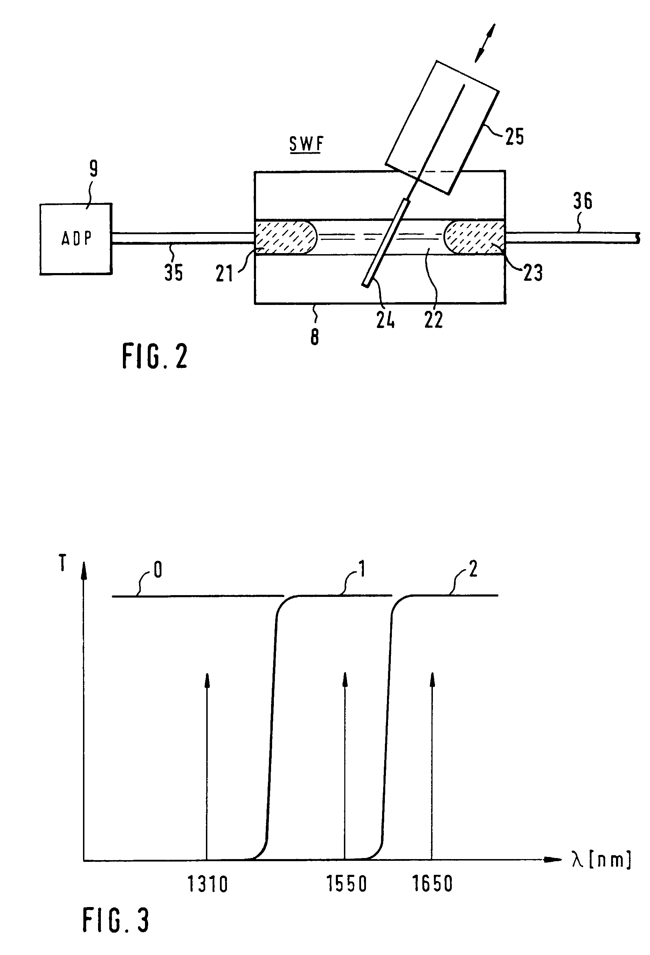

A simple filter device 8 (SWF) according to Figure 2 shows a metal housing with a bore 22, which form an optical path. At the input of the filter device 8 (SWF) a conical bore (not shown) is provided for to accommodate the optical fiber 36 and at the output of the filter device a conical bore (not shown) is provided to accommodate the optical fiber 35, which at its other end is connected optically to the photo diode 9 (APD). With an actuator 25, an optical filter 24 can be inserted reversibly in the way of a slider into the optical path of the filter device 8 (SWF). A first collimating lens 23 is positioned between the optical fiber 36 and the optical path 22 and a second collimating lens 21 is positioned between the optical fiber 35 and the optical path. The reflected signals emitted by the optical measurement section to be measured are led into the optical detector unit via lens 23, the optical path 22 and lens 21.

Figure 3 displays the transmission T of the optical path of the switchable filter device as a function of the wavelength λ for three typical cases.

In the first case, 0, no communication signals are present on the measurement section. The module according to Figure 1 shows a measure signal of the wavelength 1310 nm or 1550 nm, or 1650 nm at the output. No optical filter of the filter device 8 is brought into the optical path. The transmission of the optical path is high. In the diagram (transmission T versus wavelength λ) of Figure 3 this is shown by a line named 0 parallel to the X-axis.

In the second case, 1, the measurement section exhibits communication signals with a wavelength of 1310 nm. The filter 24 shown in Figure 2, which attenuates wavelengths in the region of 1310 nm is brought into the optical path of the switchable filter unit 8 (SWF). The module according to Figure 1 shows a measuring signal with a wavelength of 1550 nm or 1650 nm at its output, the measuring signal being fed into the measurement section to be measured and the measuring signals reflected from the measurement section being led to the detector unit (APD) via the inventive filter device, as can be seen from figures 1 and 2. The transmission of the optical path is near zero for 1310 nm and wavelengths in the region of 1550 nm or 1650 nm are passing almost unhindered. This is represented by transmission plot 1 in Figure 3; transmission plot 1 shows, that the transmission of the optical path 22 in Figure 2 is near zero in the region of 1310 nm, sharply increasing in the region below 1550 nm and reaching its maximum value in the region of 1550 nm and above. For wavelengths in the region of 1550 nm and above the optical path 22 in Figure 2 behaves nearly as if no filter is inserted into the optical path of the inventive filter device.

In the third case, 2, the measurement section exhibits communication signals with a wavelength of 1310 nm and 1550 nm. Instead of the filter 24 represented in Figure 2 a filter not shown is brought into the optical path of the switchable filter device 8 (SWF) and the module according to Figure 1 exhibits a measuring signal of the wavelength 1650 nm at its output. The filter of the inventive filter device not shown in Figure 2 shows a characteristic of transmission according to the transmission plot 2 represented in Figure 3. The transmission of the optical path is near zero for 1310 nm and for 1550 nm and wavelengths in the region of 1650 nm can pass nearly unhindered and the reflected signals of the measurement section can be detected without interference from the communication signals.

It is understood, that a measurement in the third case 2 can be performed also, for example, with two filters inserted into the optical path 22; Here two filters would be used, a first filter attenuating in the region of 1310 nm and a second filter, attenuating in the region of 1550 nm.

With the knowledge of the teachings of the invention it will be obvious to those skilled in the art how other optical filters, such as high-pass, low-pass or band-pass etc. must be combined, with regard to the respective situation, for the measurement of reflected signals in measurement sections with traffic signals.

## Claims

1. A measuring instrument for the measurement of reflected optical signals with one or more optical signal sources (1, 2 and 3) for the generation of one or more measurement signals with different wavelengths respectively and an optical detector unit (9, APD) for the measurement of reflected signals, which are caused by an optical measurement section to be measured by the application of one or more of the measurement signals from the one or more optical signal sources (1, 2 and 3), whereby communication signals with one or more wavelengths differing from the one or more wavelengths of the one or more measuring signals can be present on the optical measurement section, *characterized in that* a switchable filter device (8, SWF) is positioned in the optical path between the measurement section and the optical detector unit (9, APD), which allows the optical measurement signals reflected from the measurement section to pass in the direction of the detector unit and holds back one or more of the communication signals from the detector unit or at least strongly attenuates them.

2. A measuring instrument according to Claim 1 *characterized in that* one or more of the optical signal sources (1, 2, and 3) generate signals of a wavelength, which is larger than the wavelengths of the communication signals present on the measurement section.

3. A measuring instrument according to Claim 1 or 2 *characterized in that* the measuring signals have a wavelength of 1.65 µm, 1.55 µm and 1.31 µm and a measuring wavelength is used for the measurement of the measurement section on which communication signals are present, which differs from the wavelength of the communication signals.

4. A measuring instrument according to one or more of the aforementioned Claims, *characterized in that* the measuring instrument is an OTDR module and is equipped with a first laser source (1, LD 1.31, a second laser source (2, LD 1.55) and/or a third laser source (3, LD 1.65), a detector unit (APD), one or more wavelength-dependent couplers (4, WDM 1, 5, WDM 2), a wavelength-independent coupler (WIC), a monitor photo diode (PD) and a switchable filter unit (SWF).

5. A measuring instrument according to Claim 4 *characterized in that* the first, second and/or third laser source (1, 2 and 3) are made up from a laser diode (LD), which emits a wavelength of 1.31 µm, 1.55 µm, or 1.65 µm.

6. A measuring instrument according to Claim 1 or 4 *characterized in that* the detector unit (9, APD) is made up from an avalanche photo diode (APD).

7. A measuring instrument according to Claim 4, 5 or 6 *characterized in that* two laser sources (2 and 3) each are connected to the input of a first wavelength-dependent coupler (4, WDM 1) via a first and a second optical fiber (31 and 32), the output of the first wavelength -dependent coupler (4, WDM 1) is connected to the input of a second wavelength-dependent coupler (5, WDM 2), and a third laser source (1, LD 1.31) also is connected to input of the wavelength-independent coupler (5, WDM 2) via an optical fiber (34).

8. A measuring instrument according to one or more of the Claims above *characterized in that* the output of the second wavelength-dependent coupler (5, WDM 2) is in optical connection with the input of the wavelength-independent coupler (6, WIC) via a fifth optical fiber (37) and the output of the switchable filter device (8, SWF) also is in optical connection with the input of the wavelength-independent coupler (6, WIC).

9. A measuring instrument according to one or more of the Claims above *characterized in that* the switchable filter device (8, SWF) is positioned in the optical path between the detector unit (9, APD) and the input of the wavelength-independent coupler (6, WIC).

10. A measuring instrument according to one or more of the aforementioned Claims *characterized in that* the switchable filter device (8, SWF) is positioned in the optical path between the output of the wavelength-independent coupler (6, WIC) and a port for measuring instrument (10) for connecting a measuring instrument with the measurement section.

11. A measuring instrument according to one or more of the aforementioned Claims above *characterized in that* the switchable filter device (8, SWF) is positioned in the optical path between the output of the measuring instrument (10) and the measurement section.

12. A measuring instrument according to one or more of the aforementioned Claims *characterized in that* the output of the wavelength-independent coupler (6, WIC) is also connected via an optical fiber (38), to a monitor photo diode (7, PD) for monitoring and adjusting of the optical signals emerging from the measuring instrument.

13. A measuring instrument according to one or more of the aforementioned Claims *characterized in that* the switchable filter device (8, SWF) contains a first optical lens (23) at its input, a second optical lens (21) at its output and one or more optical filters (24) in the optical path (22) between the first and the second lens (23, 21) for the attenuation of communication signals (1310 nm, 1550 nm and 1650 nm) present on the optical measurement section.

14. A measuring instrument according to Claim 13 *characterized in that* one or more of the optical filters (24) attenuating the communication signals (1310 nm, 1550 nm and 1650 nm) are moved into the optical path (22) of the switchable filter device (8, SWF) by one ore more electrically or mechanically operated actuators (25).

15. A measuring instrument according to Claim 14 *characterized in that* the switchable filter device (8, SWF) contains several filters moved into the optical path in series for different wavelengths, especially for 1.31 µm, 1.55 µm, or 1.65 µm.

16. A measuring instrument according to Claim 14 *characterized in that* several optical filters are positioned on the axis of an actuator (25) which can be moved into the optical path (22) of the switchable filter device (8, SWF) one after another and/or stacked e.g. in the way of a slider or a filter wheel with several filters rotating through the optical path.

17. A measuring instrument according to Claim 14 *characterized in that* one or more optical filters are placed on the actuator axis and the actuator (25) tilting the filter(s) into the optical path (22) of the switchable filter device (8, SWF).

18. A measuring instrument according to one or more of the aforementioned Claims *characterized in that* one or more optical filters are moved into the optical path of the switchable filter device (8, SWF) with one or more actuators (25) by rotation, tilting or wobbling.

19. A measuring instrument according to one or more of the aforementioned Claims *characterized in that* the actuator (25) is driven electrically by a rotating magnet, a stepping motor or a linear drive and/or a wobble plate is used which allows for small changes in the tilt angle of the filters brought into the optical path (22) of the switchable filter device (8, SWF) at a large angle of rotation.

20. A measuring instrument according to one or more of the aforementioned Claims *characterized in that* that one or more filters of the switchable filter unit (8, SWF) are built from an electrically controllable acousto-optical filter.

21. A measuring instrument according to one or more of the aforementioned Claims *characterized in that* the detector unit (9, APD) is directly connected to the second lens (21) at the output of the switchable filter device (8, SWF) and not via an optical fiber or the detector unit (9, APD) is connected to the output of the switchable filter device (8, SWF) via a thick optical fiber (35) with a thickness of for example 50 µm instead of the customary used fibers with a thickness of 9 µm.

22. A measuring instrument according to one or more of the aforementioned Claims *characterized in that* one or both of the optical lenses (23, 21) are collimating, gradient, spherical and/or dichroic lenses.

23. A measuring instrument according to one or more of the aforementioned Claims *characterized in that* the housing of the switchable filter device (8, SWF) is made of, for example, metal, in which a bore is provided for the optical path (22), and that to the left and/or to the right of the bore at the input and/or the output of the switchable filter device (8, SWF) a conical bore is provided to accommodate an optical fiber (35, 36).

24. A measuring instrument according to one or more of the aforementioned Claims *characterized in that* one or more filters (24) of the switchable filter device (8, SWF) with the aid of one or more forks, which are, for example, arranged in series in the optical path of the switchable filter device (22) and operate in the fashion of a throttle valve in a carburetor, are arranged rotating in the optical path (22) of the switchable filter device (8, SWF).

25. A measuring instrument according to one or more of the aforementioned Claims *characterized in that* one or more filters of the switchable filter device (8, SWF) operate in the fashion of a sealing cap actuated at its border at the housing of the switchable filter device (8, SWF) and can be positioned manually or electrically into the optical path of the switchable filter device (8, SWF).

## Patentansprüche

1. Ein Meßinstrument für die Messung reflektierter optischer Signale mit einem oder mehreren optischen Signalquellen (1,2 oder 3) für die Erzeugung von einem oder mehreren Meßsignalen beziehungsweise mit verschiedenen Wellenlängen und einer optischen Detektoreinheit (9,APD) für die Messung reflektierter Signale, welche durch eine optische Meßanordnung verursacht werden, um von der Anordnung von einem oder mehreren Meßsignalen von der einen oder den mehreren optischen Signalquellen (1, 2 oder 3) gemessen zu werden, wobei Kommunikationssignale mit einer oder mehreren Wellenlängen abweichend von einer oder mehreren Wellenlängen des einen oder der Meßsignale auf der optischen Meßanordnung anwesend sein können, dadurch gekennzeichnet, daß eine schaltbare Filtereinheit (8,SWF) im Lichtweg zwischen der Meßanordnung und der optischen Detektoreinheit (9, APD) positioniert ist, welche erlaubt, daß die optischen Meßsignale, welche von der Meßanordnung reflektiert werden, in die Richtung der Detektoreinheit passieren und eines oder mehrere der Kommunikationssignale vor der Detektoreinheit zurückhält oder sie mindestens stark abschwächt.

2. Ein Meßinstrument gemäß Anspruch 1, **dadurch gekennzeichnet, daß** eine oder mehrere der optischen Signalquellen (1,2 oder 3) Signale einer Wellenlänge erzeugen, welche größer als die Wellenlänge der in der Meßanordnung anwesenden Kommunikationssignale ist.

3. Ein Meßinstrument gemäß Anspruch 1 und 2, **dadurch gekennzeichnet, daß** die Meßsignale eine Wellenlänge von 1,65 µµm, 1,55 µµm und 1,31 µµm haben und eine Meßwellenlänge, die von der Wellenlänge der Kommunikationssignale abweicht, für die Messung der Meßanordnung, auf welcher die Kommunikationssignale anwesend sind, benutzt wird.

4. Ein Meßinstrument gemäß einem oder mehreren der vorhergehenden Ansprüche, **dadurch gekennzeichnet, daß** das Meßinstrument ein OTDR-Modul ist und mit einer ersten Laserquelle (1, LD 1,31), einer zweiten Laserquelle (2, LD 1,55) und/oder einer dritten Laserquelle (3, LD 1,65), einer Detektoreinheit (APD), einem oder mehreren wellenlängenabhängigen Kopplern (4, WDM1, 5 , WDM2), einem wellenlängenunabhängigen Koppler (WIC), einer Monitor-Photodiode (PD) und einer schaltbaren Filtervorrichtung (SWF) ausgerüstet ist.

5. Ein Meßinstrument gemäß Anspruch 4, dadurch gekennzeichnet, **daß** die erste, zweite und/oder dritte Laserquelle (1,2 oder 3) aus einer Laserdiode (LD) besteht, welche eine Wellenlänge von 1,31 µm, 1,55 µµm und 1,65 µµm ausstrahlt.

6. Ein Meßinstrument gemäß Anspruch 1 oder 4, **dadurch gekennzeichnet, daß** die Detektoreinheit (9, APD) aus einer Avalanche-Photodiode besteht.

7. Ein Meßinstrument gemäß Anspruch 4,5 oder 6, **dadurch gekennzeichnet, daß** 2 Laserquellen (2 und 3) jeweils über einen ersten und zweiten Lichtwellenleiter (31 und 32) mit dem Eingangssignal eines ersten wellenlängenabhängigen Kopplers (4, WDM 1) verbunden sind, das Ausgangssignal des ersten wellenlängenabhängigen Kopplers (4, WDM 1) mit dem Eingangssignal des zweiten wellenlängenabhängigen Kopplers (5, WDM 2) verbunden ist, und die dritte Laserquelle (1, LD 1,31) ebenfalls über einen Lichtwellenleiter (34) mit dem Eingangssignal des wellenlängenunabhängigen Kopplers (5, WDM2) verbunden ist.

8. Ein Meßinstrument gemäß einem oder mehreren der vorhergehenden Ansprüche, **dadurch gekennzeichnet, daß** das Ausgangssignal des zweiten wellenlängenabhängigen Kopplers (5, WDM 2) mit dem Eingangssignal des wellenlängenunabhängigen Kopplers (6, WIC) über einen fünften Lichtwellenleiter (37) optisch verbunden ist, und das Ausgangssignal der schaltbaren Filtervorrichtung (8, SWF) ebenfalls mit dem Eingangssignal des wellenlängenunabhängigen Kopplers (6, WIC) optisch verbunden ist.

9. Ein Meßinstrument gemäß einem oder mehreren der vorhergehenden Ansprüche, **dadurch gekennzeichnet, daß** die schaltbare Filtervorrichtung (8, SWF) im Lichtweg zwischen der Detektoreinheit (9, APD) und dem Eingangssignal des wellenlängenunabhängigen Kopplers (6, WIC) positioniert wird.

10. Ein Meßinstrument gemäß einem oder mehreren der vorhergehenden Ansprüche, **dadurch gekennzeichnet, daß** die schaltbare Filtervorrichtung (8, SWF) im Lichtweg zwischen dem Ausgangssignal des wellenlängenunabhängigen Kopplers (6, WIC) und dem Port für das Meßinstrument (10) positioniert wird, um ein Meßinstrument an die Meßanordnung anzuschließen.

11. Ein Meßinstrument gemäß einem oder mehreren der vorhergehenden Ansprüche, **dadurch gekennzeichnet**, **daß** die schaltbare Filtervorrichtung (8, SWF) im Lichtweg zwischen dem Ausgangssignal des Meßinstruments (10) und der Meßanordnung positioniert wird.

12. Ein Meßinstrument gemäß einem oder mehreren der vorhergehenden Ansprüche, **dadurch gekennzeichnet, daß** das Ausgangssignal des wellenlängenunabhängigen Kopplers (6, WIC) auch über einen Lichtwellenleiter (38) mit einer Kontroll-Photodiode (7,PD) verbunden ist, um die von dem Meßinstrument ausgehenden Meßsignale zu beobachten und zu justieren.

13. Ein Meßinstrument gemäß einem oder mehreren der vorhergehenden Ansprüche, **dadurch gekennzeichnet, daß** die schaltbare Filtervorrichtung (8, SWF) eine erste optische Linse (23) am Eingang, eine zweite optische Linse (21) am Ausgang und einen oder mehrere Filter (24) im Lichtweg (22) zwischen der ersten und zweiten Linse (23, 21) für die Abschwächung der in der optischen Meßanordnung vorhandenen Kommunikationssignale (1310 nm, 1550 nm und 1650 nm) enthält.

14. Ein Meßinstrument gemäß Anspruch 13, **dadurch gekennzeichnet, daß** einer oder mehrere der optischen Filter (24), welche die Kommunikationssignale (1310 nm, 1550 nm, 1650 nm) abschwächen, in den Lichtweg (22) der schaltbaren Filtereinheit (8, SWF) durch einen oder durch mehrere elektrisch oder mechanisch betriebene Betätigungselemente (25) bewegt werden.

15. Ein Meßinstrument gemäß Anspruch 14, **dadurch gekennzeichnet, daß** die schaltbare Filtervorrichtung (8, SWF) mehrere Filter enthält, die nacheinander bei verschiedenen Wellenlängen, besonders bei 1,31 µm, 1,55 µm und 1,65 um, in den Lichtweg bewegt werden.

16. Ein Meßinstrument gemäß Anspruch 14, **dadurch gekennzeichnet, daß** mehrere optische Filter entlang der Achse des Betätigungselementes (25) positioniert werden, welches in den Lichtweg (22) der schaltbaren Filtereinheit (8, SWF) bewegt werden kann, wobei die Filter einer nach dem anderen und/oder zusammen, zum Beispiel durch einen Schieber oder ein Filterrevolver mit mehreren Filtern durch den Lichtweg rotieren.

17. Ein Meßinstrument gemäß Anspruch 14, **dadurch gekennzeichnet, daß** ein oder mehrere optische Filter entlang der Betätigungsachse des Betätigungselementes (25) positioniert werden, das den oder die Filter in den Lichtweg (22) der schaltbaren Filtervorrichtung (8, SWF) neigt.

18. Ein Meßinstrument gemäß Anspruch 14, **dadurch gekennzeichnet, daß** ein oder mehrere optische Filter durch ein oder mehrere Betätigungselemente (25) mittels Drehung, Neigung oder Wobbeln in den Lichtweg der schaltbaren Filtervorrichtung (8, SWF) bewegt werden.

19. Ein Meßinstrument gemäß einem oder mehreren der vorhergehenden Ansprüche, **dadurch gekennzeichnet, daß** das Betätigungselement elektrisch durch einen rotierenden Magneten, einen Schrittmotor oder einen gleichförmig laufenden Motor betrieben wird und/oder eine Taumelscheibe benutzt wird. welche kleine Änderungen des Neigungswinkels bei einem großen Rotationswinkel der Filter erlaubt, die in den Lichtweg (22) der schaltbaren Filtervorrichtung (8, SWF) gebracht werden.

20. Ein Meßinstrument gemäß einem oder mehreren der vorhergehenden Ansprüche, **dadurch gekennzeichnet, daß** ein oder mehrere der Filter der schaltbaren Filtervorrichtung (8, SWF) aus einem elektrisch steuerbaren akustooptischen Filter hergestellt wurden.

21. Ein Meßinstrument gemäß einem oder mehreren der vorhergehenden Ansprüche, **dadurch gekennzeichnet, daß** die Detektoreinheit (9, APD) direkt und nicht über einen Lichtwellenleiter mit der zweiten Linse (21) am Ausgang der schaltbaren Filtervorrichtung (8, SWF) verbunden ist oder die Detektoreinheit (9, APD) über einen Lichtwellenleiter mit größerem Durchmesser (35), z.B. mit einem Durchmesser von 50 µµm anstatt der normalerweise verwendeten Fasern mit einem Durchmesser von 9 µµm, mit dem Ausgangssignal der schaltbaren Filtervorrichtung (8, SWF) verbunden ist.

22. Ein Meßinstrument gemäß einem oder mehreren der vorhergehenden Ansprüche, **dadurch gekennzeichnet, daß** eine oder beide der optischen Linsen (23, 21) kollimatisch, geneigt, sphärisch und/oder dichroitisch sind.

23. Ein Meßinstrument gemäß einem oder mehreren der vorhergehenden Ansprüche, **dadurch gekennzeichnet, daß** das Gehäuse der schaltbaren Filtervorrichtung (8, SWF) z.B. aus Metall gefertigt wurde, das eine Bohrung für den Lichtweg (22) hat, und das zur linken und/oder rechten Seite der Bohrung am Eingang und/oder Ausgang der schaltbaren Filtervorrichtung (8, SWF) eine konische Bohrung enthält, um den Lichtwellenleiter aufzunehmen.

24. Ein Meßinstrument gemäß einem oder mehreren der vorhergehenden Ansprüche, **dadurch gekennzeichnet, daß** ein oder mehrere Filter (24) der schaltbaren Filtervorrichtung (8, SWF) mit Hilfe einer oder mehrerer Gabeln, die zum Beispiel hintereinander in den Lichtwea der schaltbaren Filtervorrichtung (22) angebracht werden und wie die Drosselklappen eines Vergasers arbeiten, so angebracht werden, daß sie in dem Lichtweg (22) der schaltbaren Filtervorrichtung rotieren.

25. Ein Meßinstrument gemäß einem oder mehreren der vorhergehenden Ansprüche, **dadurch gekennzeichnet, daß** ein oder mehrere Filter der schaltbaren Filtervorrichtung (8, SWF) wie an ihrem Rand zu betätigende Verschlußklappen am Gehäuse des schaltbaren Filtervorrichtung (8, SWF) arbeiten und manuell oder elektrisch im Lichtweg der schaltbaren Filtervorrichtung (8, SWF) plaziert werden können.

## Revendications

1. Instrument de mesure pour la mesure de signaux optiques réfléchis comprenant une ou plusieurs sources de signaux optiques (1, 2 et 3) pour générer respectivement un ou plusieurs signaux de mesure ayant différentes longueurs d'onde et une unité de détecteur optique (9, APD) pour la mesure de signaux réfléchis, dont la mesure est réalisée par une section de mesure optique par l'application d'un ou plusieurs des signaux de mesure provenant de la source de signaux optiques (1, 2 et 3), des signaux de communication ayant une ou plusieurs longueurs d'onde différant des une ou plusieurs longueurs d'onde des un ou plusieurs signaux de mesure pouvant être présents sur la section de mesure optique, caractérisé en ce qu'un dispositif à filtres commutables (8, SWF) est positionné sur le trajet optique entre la section de mesure et l'unité de détecteur optique (9, APD), ce qui permet aux signaux de mesure optique réfléchis par la section de mesure de passer dans la direction de l'unité de détecteur et empêche un ou plusieurs des signaux de communication d'atteindre l'unité de détecteur ou du moins les atténue fortement.

2. Instrument de mesure selon la revendication 1, caractérisé en ce qu'une ou plusieurs des sources de signaux optiques (1, 2 et 3) génèrent des signaux d'une longueur d'onde qui est supérieure aux longueurs d'onde des signaux de communication présents sur la section de mesure.

3. Instrument de mesure selon la revendication 1 ou 2, caractérisé en ce que les signaux de mesure ont une longueur d'onde de 1,65 µm, 1,55 µm et 1,31 µm et en ce qu'on utilise, pour la mesure de la section de mesure sur laquelle des signaux de communication sont présents, une longueur d'onde de mesure qui diffère de la longueur d'onde des signaux de communication.

4. Instrument de mesure selon une ou plusieurs des revendications précédentes, caractérisé en ce que l'instrument de mesure est un module OTDR et est équipé d'une première source laser (1, LD 1.31), d'une deuxième source laser (2, LD 1.55) et/ou d'une troisième source laser (3, LD 1.65), d'une unité de détecteur (APD), d'un ou plusieurs coupleurs dépendants de la longueur d'onde (4, WDM 1; 5, WDM 2), d'un coupleur indépendant de la longueur d'onde (WIC), d'une photodiode de surveillance (PD) et d'un dispositif à filtres commutables (SWF).

5. Instrument de mesure selon la revendication 4, caractérisé en ce que la première, la deuxième et/ou la troisième source laser (1, 2 et 3) est constituée d'une diode laser (LD) qui émet une longueur d'onde de 1,31 µm, 1,55 µm ou 1,65 µm.

6. Instrument de mesure selon la revendication 1 ou 4, caractérisé en ce que l'unité de détecteur (9, APD) est constituée d'une photodiode à avalanche (APD).

7. Instrument de mesure selon la revendication 4, 5 ou 6, caractérisé en ce que deux sources laser (2 et 3) sont chacune connectées à l'entrée d'un premier coupleur dépendant de la longueur d'onde (4, WDM 1) par l'intermédiaire d'une première et d'une deuxième fibre optique (31 et 32), la sortie du premier coupleur dépendant de la longueur d'onde (4, WDM 1) est connectée à l'entrée d'un deuxième coupleur dépendant de la longueur d'onde (5, WDM 2) et une troisième source laser (1, LD 1.31) est également connectée à l'entrée du coupleur dépendant de la longueur d'onde (5, WDM 2) par l'intermédiaire d'une fibre optique (34).

8. Instrument de mesure selon une ou plusieurs des revendications précédentes, caractérisé en ce que la sortie du deuxième coupleur dépendant de la longueur d'onde (5, WDM 2) est en connexion optique avec l'entrée du coupleur indépendant de la longueur d'onde (6, WIC) par l'intermédiaire d'une cinquième fibre optique (37) et la sortie du dispositif à filtres commutables (8, SWF) est également en connexion optique avec l'entrée du coupleur indépendant de la longueur d'onde (6, WIC).

9. Instrument de mesure selon une ou plusieurs des revendications précédentes, caractérisé en ce que le dispositif à filtres commutables (8, SWF) est positionné sur le trajet optique entre l'unité de détecteur (9, APD) et l'entrée du coupleur indépendant de la longueur d'onde (6, WIC).

10. Instrument de mesure selon une ou plusieurs des revendications précédentes, caractérisé en ce que le dispositif à filtres commutables (8, SWF) est positionné sur le trajet optique entre la sortie du coupleur indépendant de la longueur d'onde (6, WIC) et un connecteur pour instrument de mesure (10) permettant de connecter un instrument de mesure à la section de mesure.

11. Instrument de mesure selon une ou plusieurs des revendications précédentes, caractérisé en ce que le dispositif à filtres commutables (8, SWF) est positionné sur le trajet optique entre la sortie de l'instrument de mesure (10) et la section de mesure.

12. Instrument de mesure selon une ou plusieurs des revendications précédentes, caractérisé en ce que la sortie du coupleur indépendant de la longueur d'onde (6, WIC) est également connectée par l'intermédiaire d'une fibre optique (38) à une photodiode de surveillance (7, PD) permettant de surveiller et de régler les signaux optiques sortant de l'instrument de mesure.

13. Instrument de mesure selon une ou plusieurs des revendications précédentes, caractérisé en ce que le dispositif à filtres commutables (8, SWF) contient une première lentille optique (23) à son entrée, une deuxième lentille optique (21) à sa sortie et un ou plusieurs filtres optiques (24) sur le trajet optique (22) entre la première et la deuxième lentille (23, 21) pour permettre l'atténuation de signaux de communication (1310 nm, 1550 nm et 1650 nm) présents sur la section de mesure optique.

14. Instrument de mesure selon la revendication 13, caractérisé en ce qu'un ou plusieurs des filtres optiques (24) atténuant les signaux de communication (1310 nm, 1550 nm et 1650 nm) sont introduits dans le trajet optique (22) du dispositif à filtres commutables (8, SWF) par un ou plusieurs actionneurs activés électriquement ou mécaniquement (25).

15. Instrument de mesure selon la revendication 14, caractérisé en ce que le dispositif à filtres commutables (8, SWF) contient plusieurs filtres introduits en série dans le trajet optique pour différentes longueurs d'onde, en particulier pour 1,31 µm, 1,55 µm ou 1,65 µm.

16. Instrument de mesure selon la revendication 14, caractérisé en ce que sont positionnés sur l'axe d'un actionneur (25) plusieurs filtres optiques pouvant être introduits dans le trajet optique (22) du dispositif à filtres commutables (8, SWF) l'un après l'autre et/ou en superposition par exemple à la manière d'un diaphragme coulissant ou d'une tourelle de filtres comportant plusieurs filtres en rotation en travers du trajet optique.

17. Instrument de mesure selon la revendication 14, caractérisé en ce qu'un ou plusieurs filtres optiques sont placés sur l'axe de l'actionneur, l'actionneur (25) inclinant le(s) filtre(s) dans le trajet optique (22) du dispositif à filtres commutables (8, SWF).

18. Instrument de mesure selon une ou plusieurs des revendications précédentes, caractérisé en ce qu'un ou plusieurs filtres optiques sont introduits dans le trajet optique du dispositif à filtres commutables (8, SWF) avec un ou plusieurs actionneurs (25) par rotation, inclinaison ou oscillation.

19. Instrument de mesure selon une ou plusieurs des revendications précédentes, caractérisé en ce que l'actionneur (25) est entraîné électriquement par un aimant rotatif, un moteur pas-à-pas ou un entraînement linéaire et/ou en ce qu'un plateau oscillant est utilisé qui tient compte de petites variations de l'angle d'inclinaison des filtres introduits dans le trajet optique (22) du dispositif à filtres commutables (8, SWF) à un grand angle de rotation.

20. Instrument de mesure selon une ou plusieurs des revendications précédentes, caractérisé en ce qu'un ou plusieurs filtres du dispositif à filtres commutables (8, SWF) sont fabriqués à partir d'un filtre acousto-optique à commande électrique.

21. Instrument de mesure selon une ou plusieurs des revendications précédentes, caractérisé en ce que l'unité de détecteur (9, APD) est directement connectée à la deuxième lentille (21) à la sortie du dispositif à filtres commutables (8, SWF) et non par l'intermédiaire d'une fibre optique, ou en ce que l'unité de détecteur (9, APD) est connectée à la sortie- du dispositif à filtres commutables (8, SWF) par l'intermédiaire d'une fibre optique épaisse (35), d'une épaisseur de 50 µm par exemple, au lieu des fibres habituellement utilisées d'une épaisseur de 9 µm.

22. Instrument de mesure selon une ou plusieurs des revendications précédentes, caractérisé en ce qu'une des lentilles optiques ou les deux (23, 21) sont des condenseurs sphériques et/ou dichroïques à gradient d'index.

23. Instrument de mesure selon une ou plusieurs des revendications précédentes, caractérisé en ce que le logement du dispositif à filtres commutables (8, SWF) est un logement en métal par exemple, dans lequel un alésage est prévu pour le trajet optique (22), et en ce qu'à gauche et/ou à droite de l'alésage à l'entrée et/ou à la sortie du dispositif à filtres commutables (8, SWF), un alésage conique est prévu pour permettre le passage d'une fibre optique (35, 36).

24. Instrument de mesure selon une ou plusieurs des revendications précédentes, caractérisé en ce qu'un ou plusieurs filtres (24) du dispositif à filtres commutables (8, SWF), à l'aide d'une ou plusieurs fourches qui sont, par exemple, agencées en série sur le trajet optique du dispositif à filtres commutables (22) et fonctionnent à la manière d'un papillon de carburateur, sont agencés pour pouvoir tourner sur le trajet optique (22) du dispositif à filtres commutables (8, SWF).

25. Instrument de mesure selon une ou plusieurs des revendications précédentes, caractérisé en ce qu'un ou plusieurs filtres du dispositif à filtres commutables (8, SWF) fonctionnent à la manière d'un capot de fermeture actionné par son bord au niveau du logement du dispositif à filtres commutables (8, SWF) et peuvent être introduits manuellement ou électriquement dans le trajet optique du dispositif à filtres commutables (8, SWF).
